# EUROPEAN PATENT SPECIFICATION

(11) **EP 2 114 718 B1**
(45) Date of publication and mention of the grant of the patent: **21.12.2011**
(21) Application number: 08705337.7
(22) Date of filing: 22.01.2008
(51) Int. Cl.: B60K 31/00

(54) **CRUISE CONTROL SYSTEM AND METHOD FOR CONTROLLING THE TARGET SPEED OF A CRUISE CONTROL SYSTEM**
FAHRGESCHWINDIGKEITSREGELUNGSSYSTEM UND VERFAHREN ZUR STEUERUNG DER ZIELGESCHWINDIGKEIT EINES FAHRGESCHWINDIGKEITSREGELUNGSSYSTEMS
SYSTÈME DE RÉGLAGE DE VITESSE ET PROCÉDÉ DE CONTRÔLE DE LA VITESSE DÉSIRÉE D'UN SYSTÈME DE RÉGLAGE DE VITESSE

(30) Priority: 30.01.2007 SE 0700207
(43) Date of publication of application: 11.11.2009
(73) Proprietor: Scania CV AB (PUBL), 151 87 Södertälje (SE)
(72) Inventor: RICKMAN, Johnny, S-152 71 Södertälje (SE); WINGREN, Anna, S-151 38 Södertälje (SE); WICKSTRÖM, Samuel, S-151 71 Södertälje (SE)
(86) International application number: PCT/SE2008/050065
(87) International publication number: WO 2008/094112

(56) References cited:
- US-A- 4 211 193
- US-A- 4 467 428
- US-A- 5 019 986
- US-A- 5 979 582
- US-A- 6 076 036
- US-B1- 6 374 173

## Description

### FIELD OF THE INVENTION AND PRIOR ART

The present invention relates to a cruise control system for a motor vehicle according to the preamble of claim 8. The invention also relates to a method for controlling the target speed of such a cruise control system. Furthermore, the invention relates to a computer program comprising computer program code for implementing a method according to the invention, a computer program product comprising a data storage medium readable by an electronic control unit and having said computer program stored thereon, and an electronic control unit.

### BACKGROUND ART

US6076036 discloses a method for controlling the target speed according to the preamble of claim 1.

Motor vehicles, such as cars, lorries, towing vehicles and buses, are often provided with a so-called cruise control system, also denominated speed control system, for automatically controlling the vehicle speed. Such a control system comprises means, such as a speed sensor, for monitoring the actual vehicle speed. The cruise control system compares the actual vehicle speed with a set target speed. The target speed may for instance be entered into the cruise control system as the prevailing actual vehicle speed when a set switch is actuated by the driver. The cruise control system generates an error signal by comparing the actual vehicle speed with the target speed. The error signal is then for instance used to control an actuator coupled to the fuel pump or to the vehicle throttle in order to change the engine speed until the error signal is substantially zero, i.e. until the actual vehicle speed is equal to the target speed.

A conventional cruise control system has a disadvantageous effect when a vehicle descends a downhill slope, particularly if the downhill slope is followed by an uphill slope. When a vehicle under the control of such a cruise control system descends a steep downhill slope, the vehicle will accelerate under the effect of gravity to a speed above the target speed. During this process, the cruise control system will reduce the engine power to a minimum. If the downhill slope is followed by an uphill slope, the vehicle speed will fall as the vehicle begins to ascend the uphill slope, but the cruise control system will not begin to increase the engine power from its minimum setting until the actual speed of the vehicle has fallen to the target speed. Therefore, a large amount of the kinetic energy gained by the vehicle in descending the downhill slope will not be efficiently utilized. This is particularly disadvantageous when the vehicle is a heavy vehicle.

In order to overcome the above-mentioned disadvantage, cruise control systems have been proposed and developed, which allow the target speed to be increased at the end of a downhill slope and to be maintained at an increased level for a certain period of time thereafter so as to thereby allow the vehicle to enter a following uphill slope at a speed above the target speed set by the driver. Hereby, the vehicle will take better advantage of the kinetic energy gained when descending the previous downhill slope. Such a cruise control system is for instance known from US 4 467 428 A.

Heavy motor vehicles, such as lorries, towing vehicles and buses, are often provided with brake control means which can be enabled by the driver of the vehicle in order to automatically control one or several brakes of the vehicle so as to restrict the speed of the vehicle when the vehicle descends a downhill slope. A target speed for the brake control means is settable by the driver. In this description and the subsequent claims, this target speed is referred to as "brake reference speed". In dependence on information as to the set brake reference speed and the actual speed of the vehicle, the brake control means will endeavour to restrict the speed of the vehicle to the brake reference speed. Such a brake control means is normally adapted to control one or several auxiliary brakes of the vehicle. An auxiliary brake is a supplement to the ordinary wheel brakes of the vehicle and is configured to produce a retarding torque for decreasing the rotational speed of the engine crankshaft. An auxiliary brake may for instance be an engine brake, an exhaust brake, an electromagnetic retarder or a hydraulic retarder. The auxiliary brakes are with advantage used for constant speed keeping purposes in downhill slopes and for moderate decelerations, whereas the vehicle's ordinary wheel brakes are mainly used for powerful and sudden braking operations. With the use of auxiliary brakes, the ordinary wheel brakes, which normally constitute friction brakes of disc brake or drum brake type, are prevented from overheating with the associated risk of brake failure and the wear thereof is reduced.

US 5 634 446 A discloses a cruise control system provided with brake control means which controls auxiliary brakes of a vehicle in order to restrict the speed of the vehicle to a given brake reference speed when the vehicle accelerates under the effect of gravity in a downhill slope to a speed above the ordinary target speed set for the cruise control system.

### DISCLOSURE OF THE INVENTION

The object of the present invention is to propose a new and advantageous manner of regulating the target speed of a cruise control system of a motor vehicle.

According to the invention, this object is achieved by a method having the features defined in claim 1 and a cruise control system having the features defined in claim 8.

According to the invention:
- the target speed for the engine control means is set to a basic value that is adjustable by the driver of the vehicle;
- the target speed is automatically and temporarily increased from the basic value to a modified value when it is established that one or several given conditions are fulfilled so as to thereby allow the vehicle, when descending or after having descended a downhill slope, to temporarily maintain a speed above the speed corresponding to the basic value;

- an evaluation value representing the degree of hilliness of a latest stretch of road travelled by the vehicle is established based on consecutive measuring or calculation values as to the instantaneous inclination or altitude or driving resistance of the vehicle; and
- the target speed, optionally on condition that one or several given conditions are fulfilled, is maintained at the modified value for a given time period or gradually decreased from the modified value towards the basic value with steps of a given magnitude at given time intervals, the length of said time period or time intervals being established in dependence on the prevailing evaluation value.

The vehicle may benefit from the higher speed corresponding to said modified value if it encounters an uphill slope before the target speed has been reset from the modified value to the basic value, since an additional speed when entering an uphill slope will reduce the time and fuel required for ascending the uphill slope. The invention is based on the fact that the additional fuel required for maintaining the speed of the vehicle above the speed corresponding to the basic value when the vehicle has left a downhill slope only will contribute to improved fuel economy if the vehicle encounters an uphill slope within a certain time period. According to the invention, the evaluation value is used as a measure of the probability that the vehicle will encounter an uphill slope within a certain time period after the end of a downhill slope. A high evaluation value, i.e. a situation when it is established that the vehicle is travelling along a hilly stretch of road, implies that said probability is high and that it therefore may be favourable to maintain the increased vehicle speed, whereas a low evaluation value, i.e. a situation when it is established that the vehicle is not travelling along a hilly stretch of road, implies that said probability is low and that it therefore may be favourable to allow the vehicle speed to be reduced in a rather short time to the speed corresponding to the basic value set by the driver for the target speed. This will create opportunities for improved fuel economy of the vehicle.

According to an embodiment of the invention, the target speed is maintained at the modified value after the lapse of said time period as long as the driving resistance of the vehicle remains lower than a given lower threshold value, optionally on condition that one or several further conditions are fulfilled. The increased vehicle speed may hereby be allowed to be maintained as long as the driving resistance is sufficiently low for enabling this higher speed to be maintained at a comparatively low additional consumption of fuel.

According to another embodiment of the invention, the prevailing total weight of the vehicle is taken into account in the establishment of the length of said time period and/or time intervals. This embodiment is based on the fact that the benefit of the increased vehicle speed when ascending a subsequent uphill slope increases with the total weight of the vehicle. Thus, a heavy vehicle has a larger benefit of an increased vehicle speed when ascending a subsequent uphill slope as compared to a lighter vehicle. By taking the total weight of the vehicle into account in the establishment of the length of said time period and/or time intervals, it will be possible to optimise said time period and/or time intervals in dependence on the evaluation value as well as the total weight of the vehicle.

In this description and the subsequent claims, the expression "total weight of the vehicle" refers to the weight of the vehicle itself plus the weight of the load presently carried or towed by the vehicle.

Further advantageous features of the method and the cruise control system according to the invention are indicated in the dependent claims and the following description.

The invention also relates to a computer program having the features defined in claim 15, a computer program product having the features defined in claim 16 and an electronic control unit having the features defined in claim 17.

### BRIEF DESCRIPTION OF THE DRAWINGS

With reference to the appended drawings, a specific description of embodiments of the invention cited as examples follows below. In the drawings:
- Fig 1: is a schematic diagram of a combustion engine with an associated driveline, illustrating an embodiment of a cruise control system according to the present invention,
- Fig 2: is a schematic outline diagram of an electronic control unit for implementing a method according to the invention, and
- Fig 3: is a flow diagram illustrating a method according to an embodiment of the invention.

### MODES FOR CARRYING OUT THE INVENTION

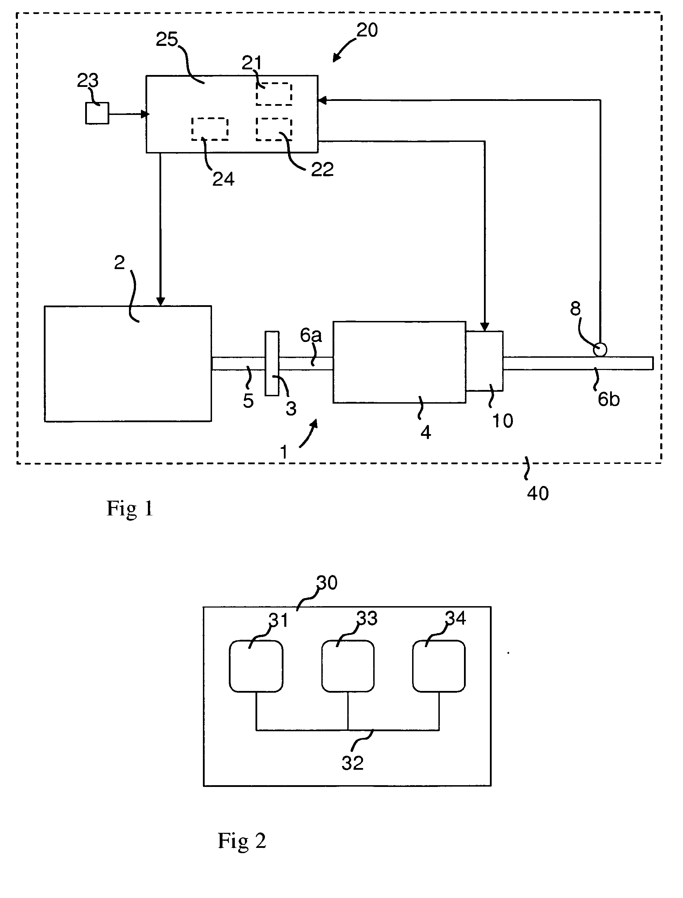

A part of a drive line 1 of a motor vehicle 40 is schematically illustrated in Fig 1. The drive line 1 comprises a vehicle engine 2, for instance in the form of a conventional combustion engine, which is connected to driving wheels (not shown) of the vehicle via a clutch 3 and a gearbox 4. The output shaft 5 of the engine 1 is connected to the input shaft 6a of the gearbox via said clutch 3, which is arranged to transfer the torque exerted by the engine to the input shaft 6a of the gearbox.

The vehicle is provided with a cruise control system 20, which comprises engine control means 21 adapted to automatically control the engine 2 in dependence on information as to a target speed Sₜ and the actual speed of the vehicle so as to endeavour to keep the speed of the vehicle essentially equal to the target speed Sₜ. The cruise control system 20 may also comprise brake control means 22 adapted to automatically control one or several brakes of the vehicle so as to endeavour to restrict the speed of the vehicle to a brake reference speed S_{ref} when the vehicle descends a downhill slope and the vehicle has been accelerated under the effect of gravity to a speed above the target speed Sₜ. Thus, when the cruise control system operates with the engine control means 21 and the brake control means 22 enabled, i.e. with the engine control means and the brake control means in operational state, the target speed Sₜ constitutes a lower speed limit for the vehicle speed whereas the brake reference speed S_{ref} constitutes an upper speed limit for the vehicle speed. If the driving resistance of the vehicle is positive, the engine control means 21 controls the engine 2 so as to strive to keep the speed of the vehicle essentially equal to the target speed Sₜ. Thus, the engine control means 21 will increase the engine power when the speed of the vehicle falls below the target speed Sₜ and reduce the engine power when the speed of the vehicle increases above the target speed. If the driving resistance of the vehicle is negative, the brake control means 22 controls one or several brakes of the vehicle so as to strive to restrict the speed of the vehicle to the brake reference speed S_{ref}. Thus, the brake control means 22 will increase the braking power when the speed of the vehicle increases above the brake reference speed S_{ref} and reduce the braking power when the speed of the vehicle falls below the brake reference speed.

If the vehicle descends a downhill slope with the engine control means 21 and the brake control means 22 enabled, the brake control means 22 will initiate a braking operation so as to endeavour to restrict the speed of the vehicle to the brake reference speed S_{ref} when the vehicle under the effect of gravity has been accelerated to a speed above the target speed Sₜ and reached the brake reference speed S_{ref}.

The brake control means 22 may be adapted to control one or several auxiliary brakes of the vehicle, such as an engine brake and/or an exhaust brake and/or an electromagnetic retarder and/or a hydraulic retarder. In the illustrated example, the brake control means 22 is adapted to control an auxiliary brake 10 in the form of a retarder, which acts on the output shaft 6b of the gearbox 4.

The cruise control system 20 further comprises speed setting means 23, by means of which the driver of the vehicle may set the target speed Sₜ to a desired basic value V_{bas}. The speed setting means 23 may be configured to allow the driver to set the brake reference speed S_{ref} as a desired offset from the basic value V_{bas} for the target speed Sₜ. The speed setting means 23 may also be configured to allow the driver to directly set a desired value for the brake reference speed S_{ref}. It is realized that the brake reference speed S_{ref} always should be set higher than the target speed Sₜ in order to avoid conflicts between the engine control means 21 and the brake control means 22.

The inventive cruise control system 20 comprises processing means 24 adapted to automatically and temporarily increase the target speed Sₜ from the basic value V_{bas} to a modified value V_{mod} when it has established that one or several given conditions are fulfilled so as to thereby allow the vehicle, when descending or after having descended a downhill slope, to temporarily maintain a speed above the speed corresponding to the basic value V_{bas}. The processing means 24 may for instance be adapted to increase the target speed Sₜ from the basic value V_{bas} to the modified value V_{mod} when it is detected that the vehicle has reached the end of a downhill slope. In the latter case, the processing means 24 is with advantage adapted to establish the magnitude of said modified value V_{mod} in dependence on the actual speed at which the vehicle was running when it was detected that the vehicle had reached the end of a downhill slope. The modified value V_{mod} may for instance be set to correspond to a speed essentially equal to the actual speed at which the vehicle was running at said moment.

When the cruise control system 20 operates with the brake control means 22 enabled, the processing means 24 is adapted to set said modified value V_{mod} to correspond to a speed lower than the brake reference speed S_{ref} in order to avoid conflicts between the engine control means 21 and the brake control means 22.

If the vehicle is provided with a top speed limiter adapted to prevent the vehicle engine 2 from accelerating the vehicle to a speed above a pre-set speed limit, this pre-set speed limit may with advantage constitute a maximum allowed value for said modified value V_{mod}.

According to the invention, the processing means 24 is adapted to establish, based on consecutive measuring or calculation values as to the instantaneous inclination or altitude or driving resistance of the vehicle, an evaluation value Vₑᵥ representing the degree of hilliness of the latest stretch of road travelled by the vehicle.

The latest stretch of road that is taken into account in the establishment of the evaluation value Vₑᵥ may for instance be the stretch of road travelled by the vehicle during a time period of a given length, for instance in the order of 5-30 minutes, up to the prevailing moment. The latest stretch of road that is taken into account in the establishment of the evaluation value Vₑᵥ may alternatively be defined as a distance of a given length travelled by the vehicle, for instance in the order of 5-50 kilometres.

The processing means 24 may for instance be adapted to establish the evaluation value Vₑᵥ as a measure indicating how long part of the time the driving resistance of the vehicle has been above a given driving resistance threshold value T_{dr} during the latest stretch of road travelled by the vehicle. Values as to the instantaneous driving resistance of the vehicle may be established by means of a suitable calculation model based on different parameters of the vehicle, such as engine load, engine rotational speed and vehicle speed, in a manner well-known to a person skilled in the art.

The processing means 24 may in addition or as an alternative be adapted to establish the evaluation value Vₑᵥ as a measure indicating how long part of the time the inclination of the vehicle has been above a given inclination threshold value during the latest stretch of road travelled by the vehicle. Values as to the instantaneous inclination of the vehicle may be established based on measuring values from an inclination sensor or by means of a suitable calculation model based on different parameters of the vehicle, such as engine load, engine rotational speed and vehicle speed, in a manner well-known to a person skilled in the art.

The processing means 24 may in addition or as an alternative be adapted to establish the evaluation value Vₑᵥ by means of information as to the change in altitude of the vehicle. The change in altitude of the vehicle may be established based on a comparison of consecutive altitude values representing the instantaneous altitude of the vehicle at different moments during the travel of the vehicle. Such altitude values may for instance be established by means of GPS (GPS = Global Positioning System) and/or a barometric altimeter.

The processing means 24 is adapted to maintain the target speed Sₜ at the modified value V_{mod} for a given time period tₚₑᵣ or gradually decrease the target speed Sₜ from the modified value V_{mod} towards the basic value V_{bas} with steps of a given magnitude at given time intervals tᵢₙₜ, optionally on condition that one or several given conditions are fulfilled. The processing means 24 is adapted to establish the length of said time period tₚₑᵣ or time intervals tᵢₙₜ in dependence on the prevailing evaluation value Vₑᵥ.

The length of said time period tₚₑᵣ may for instance vary between 0 and 60 seconds in dependence on the evaluation value Vₑᵥ. When the hilliness of the latest stretch of road travelled by the vehicle is low, the length of said time period tₚₑᵣ is to be short, whereas the length of the time period tₚₑᵣ is to be longer when said hilliness is higher.

The processing means 24 may be adapted to maintain the target speed Sₜ at the modified value V_{mod} after the lapse of said time period tₚₑᵣ as long as the driving resistance of the vehicle remains lower than a given driving resistance threshold value T_{dr1} (here denominated lower threshold value), optionally on condition that one or several further conditions are fulfilled. An upper time limit may for instance be set, after the lapse of which the target speed Sₜ is reset to or decreased towards the basic value V_{bas} irrespective of the prevailing driving resistance. The magnitude of this lower threshold value T_{dr1} may depend on the prevailing total weight of the vehicle.

When the processing means 24 has established after the lapse of said time period tₚₑᵣ that the driving resistance of the vehicle is higher than said lower threshold value T_{dr1}, the processing means 24 may be adapted to gradually decrease the target speed Sₜ from the modified value V_{mod} towards the basic value V_{bas} with steps of a given magnitude at given time intervals tᵢₙₜ. The processing means 24 is adapted to establish the length of said time intervals tᵢₙₜ in dependence on the prevailing evaluation value Vₑᵥ. If so considered suitable, the processing means 24 may be adapted to initiate this type of gradual decrease of the target speed Sₜ as soon as the target speed Sₜ has been increased from the basic value V_{bas} to the modified value V_{mod,} i.e. without awaiting the lapse of a time period tₚₑᵣ of the above-mentioned type and irrespective of the magnitude of the prevailing driving resistance of the vehicle.

The magnitude of the above-mentioned steps may be in the order of 0.05-0.5 km/h, for instance 0.1 km/h, and the time interval between each step may for instance vary between 1 and 20 seconds in dependence on the evaluation value Vₑᵥ. This decrease of the target speed Sₜ towards the basic value V_{bas} is interrupted when the target speed Sₜ has reached the basic value V_{bas}· When the hilliness of the latest stretch of road travelled by the vehicle is low, the length of said time intervals tᵢₙₜ is to be short, whereas the length of the time intervals tᵢₙₜ is to be longer when said hilliness is higher.

The processing means 24 may with advantage also be adapted to take information as to the prevailing total weight of the vehicle into account in the establishment of the length of said time period tₚₑᵣ and/or time intervals tᵢₙₜ. In this case, the length of the time period tₚₑᵣ and/or time intervals tᵢₙₜ is established in dependence on both the evaluation value Vₑᵥ and the total weight of the vehicle. Information as to the prevailing total weight of the vehicle may be established by means of a suitable calculation model based on different operating parameters and/or other parameters of the vehicle, such as air suspension pressures, vehicle geometries etc, in a manner well-known to a person skilled in the art.

After an increase of the target speed Sₜ from the basic value V_{bas} to the modified value V_{mod,} the processing means 24 may be adapted to reset the target speed Sₜ to the basic value V_{bas} when it has established that the following conditions are simultaneously fulfilled:
- the driving resistance of the vehicle is lower than a given driving resistance threshold value T_{dr2}, for instance corresponding to about 100 N, and
- the acceleration of the vehicle is higher than a given acceleration threshold value Tₐ, for instance corresponding to about 5 rpm/s.
Hereby, the target speed Sₜ will be reset to the basic value V_{bas} if the downhill slope descended by the vehicle is followed by a new steep downhill slope before the target speed Sₜ has been reset to the basic value V_{bas}. This reset of the target speed Sₜ may be given a higher priority than the above-mentioned time period tₚₑᵣ for maintenance of the increased target speed Sₜ and the above-mentioned gradual decrease of the target speed Sₜ, which implies that said time period tₚₑᵣ and said gradual decrease of the target speed Sₜ will be interrupted by a reset of the target speed Sₜ to the basic value V_{bas} when the above-mentioned conditions are fulfilled. Other alternative conditions for a reset of the target speed Sₜ to the basic value V_{bas} may also be contemplated. The principal thing is that the target speed should be reset to the basic value V_{bas} when it is detected that the vehicle has entered a downhill slope of certain steepness.

When it is established that the driving resistance of the vehicle has been increased above a given driving resistance threshold value T_{dr3} (here denominated upper threshold value) after an increase of the target speed Sₜ to the modified value V_{mod}, the processing means 24 may be adapted to lower the target speed Sₜ from the modified value V_{mod} to a value essentially corresponding to the speed at which the vehicle was running when it was established that the driving resistance of the vehicle had been increased above this upper threshold value T_{dr3}· The magnitude of this upper threshold value T_{dr3} may depend on the prevailing total weight of the vehicle. Hereby, the target speed Sₜ will be lowered from the modified value V_{mod} if the downhill slope descended by the vehicle is followed by a steep uphill slope before the target speed Sₜ has been reset to the basic value V_{bas}. This lowering of the target speed Sₜ may be given a higher priority than the above-mentioned time period tₚₑᵣ for maintenance of the increased target speed Sₜ and the above-mentioned gradual decrease of the target speed Sₜ, which implies that said time period tₚₑᵣ and said gradual decrease of the target speed Sₜ will be interrupted by a lowering of the target speed Sₜ from the modified value V_{mod} to a value essentially corresponding to the speed at which the vehicle was running when it was established that the driving resistance of the vehicle had been increased above said upper threshold value T_{dr3}.

The engine control means 21, the brake control means 22 and the processing means 24 may be integrated in one and the same electronic control unit 25, as illustrated in Fig 1, but may alternatively be arranged in separate and mutually communicating electronic control units.

The actual speed of the vehicle, i.e. the prevailing speed at which the vehicle is running, may be measured or estimated in any suitable manner. The speed of the vehicle may for instance be estimated based on measuring values of the rotational speed of some part of the vehicle's drive shaft, such as the output shaft 6b of the gearbox 4. In the example illustrated in Fig 1, the actual vehicle speed is established by means of a measuring member 8 arranged to generate a value representing the rotational speed of the gearbox output shaft 6b. The cruise control system 20 is arranged to receive information from this measuring member 8.

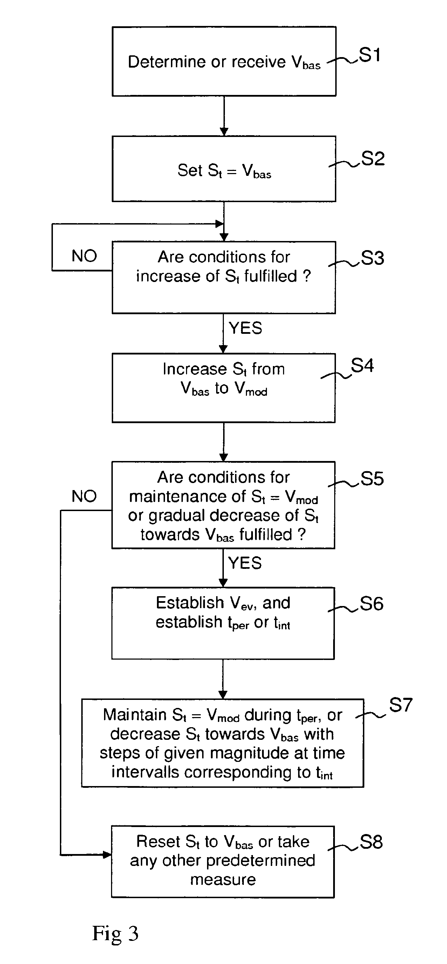

A flow diagram illustrating an embodiment of an inventive method for controlling the target speed Sₜ of a cruise control system 20 of a motor vehicle is shown in Fig 3. In a first step S1, a basic value V_{bas} for the target speed Sₜ is determined or received. In a second step S2, the target speed Sₜ is set to the basic value V_{bas}. In a third step S3, it is established whether or not one or several conditions for an automatic and temporary increase of the target speed Sₜ from the basic value V_{bas} to a modified value V_{mod} are fulfilled. If this is not the case, step S3 is repeated after a certain time interval. If this is the case, the target speed Sₜ is increased from the basic value V_{bas} to the modified value V_{mod} in step S4. It is then established in step S5 whether or not one or several conditions for a maintenance of the target speed Sₜ equal to V_{mod} or for a gradual decrease of the target speed Sₜ from the modified value V_{mod} towards the basic value V_{bas} are fulfilled. If it is indicated in step S5 that said one or several conditions are not fulfilled, the procedure proceeds to step S8 and a predetermined measure is taken, such as for instance a reset of the target speed Sₜ from the modified value V_{mod} to the basic value V_{bas}. If it is indicated in step S5 that said one or several conditions are fulfilled, an evaluation value Vₑᵥ is established in step S6, whereupon the length of a time period tₚₑᵣ or time intervals tᵢₙₜ is established in dependence on this evaluation value. In step S7, the target speed Sₜ is then maintained at the modified value V_{mod} for the time period tₚₑᵣ or gradually decreased from the modified value V_{mod} towards the basic value V_{bas} with steps of a given magnitude at the time intervals tᵢₙₜ.

Computer program code for implementing a method according to the invention is suitably included in a computer program, which is loadable into the internal memory of a computer, such as the internal memory of an electronic control unit of a motor vehicle. Such a computer program is suitably provided via a computer program product comprising a data storage medium readable by an electronic control unit, which data storage medium has the computer program stored thereon.

A computer program according to an embodiment of the invention comprises computer program code for causing a computer:
- to determine or receive a basic value V_{bas} for a target speed Sₜ;
- to determine or receive a value representing the actual speed of a vehicle;
- to control the engine of the vehicle in dependence on information as to the target speed Sₜ and the actual speed of the vehicle so as to endeavour to keep the speed of the vehicle essentially equal to the target speed Sₜ;
- to automatically and temporarily increase the target speed Sₜ from the basic value V_{bas} to a modified value V_{mod,} when it is established that one or several given conditions are fulfilled;
- to determine or receive consecutive measuring or calculation values as to the instantaneous inclination or altitude or driving resistance of the vehicle;
- to establish an evaluation value Vₑᵥ representing the degree of hilliness of the latest stretch of road travelled by the vehicle based on said consecutive measuring or calculation values; and
- to maintain the target speed Sₜ at the modified value V_{mod} for a given time period tₚₑᵣ or gradually decrease the target speed Sₜ from the modified value V_{mod} towards the basic value V_{bas} with steps of a given magnitude at given time intervals tᵢₙₜ, optionally on condition that one or several given conditions are fulfilled, the length of said time period tₚₑᵣ or time intervals tᵢₙₜ being established in dependence on the prevailing evaluation value Vₑᵥ.

Fig 2 very schematically illustrates an electronic control unit 30 comprising an execution means 31, such as a central processing unit (CPU), for executing computer software. The execution means 31 communicates with a memory 33, for instance of the type RAM, via a data bus 32. The control unit 30 also comprises data storage medium 34, for instance in the form of a hard disc, a Flash memory or a memory of the type ROM, PROM, EPROM or EEPROM. The execution means 31 communicates with the data storage medium 34 via the data bus 32. A computer program comprising computer program code for implementing a method according to the invention is stored on the data storage medium 34.

The invention is of course not in any way restricted to the embodiments described above. On the contrary, many possibilities to modifications thereof will be apparent to a person with ordinary skill in the art without departing from the scope of the invention as defined in the appended claims.

## Claims

1. A method for controlling the target speed of a cruise control system (20) of a motor vehicle, wherein the cruise control system comprises engine control means (21) adapted to automatically control the engine of the vehicle in dependence on information as to the target speed and the actual speed of the vehicle so as to endeavour to keep the speed of the vehicle essentially equal to the target speed, the target speed being set to a basic value that is adjustable by the driver of the vehicle and the target speed being automatically and temporarily increased from the basic value to a modified value when it is established that one or several given conditions are fulfilled so as to thereby allow the vehicle, when descending or after having descended a downhill slope, to temporarily maintain a speed above the speed corresponding to the basic value, **characterized in:**
- **that** an evaluation value representing the degree of hilliness of a latest stretch of road travelled by the vehicle is established based on consecutive measuring or calculation values as to the instantaneous inclination or altitude or driving resistance of the vehicle; and
- **that** the target speed, optionally on condition that one or several given conditions are fulfilled, is maintained at the modified value for a given time period or gradually decreased from the modified value towards the basic value with steps of a given magnitude at given time intervals, the length of said time period or time intervals being established in dependence on the prevailing evaluation value.

2. A method according to claim 1, **characterized in that** the target speed is maintained at the modified value after the lapse of said time period as long as the driving resistance of the vehicle remains lower than a given lower threshold value, optionally on condition that one or several further conditions are fulfilled.

3. A method according to claim 2, **characterized in that**, when it is established after the lapse of said time period that the driving resistance of the vehicle is higher than said lower threshold value, the target speed is gradually decreased from the modified value towards the basic value with steps of a given magnitude at given time intervals, the length of which being established in dependence on the prevailing evaluation value.

4. A method according to any of claims 1-3, **characterized in that** the target speed, after an increase thereof to the modified value, is reset to the basic value when it is established that the following conditions are fulfilled:
- the driving resistance of the vehicle is lower than a given threshold value, and
- the acceleration of the vehicle is higher than an acceleration threshold value.

5. A method according to any of claims 1-4, **characterized in that**, when it is established that the driving resistance of the vehicle has been increased above a given upper threshold value after an increase of the target speed to the modified value, the target speed is lowered from the modified value to a value essentially corresponding to the speed at which the vehicle was running when it was established that the driving resistance of the vehicle had been increased above this upper threshold value.

6. A method according to any of claims 1-5, **characterized in that** the prevailing total weight of the vehicle is taken into account in the establishment of the length of said time period and/or time intervals.

7. A method according to any of claims 1-6, **characterized in that** the evaluation value is established as a measure indicating how long part of the time the driving resistance of the vehicle has been above a given threshold value during the latest stretch of road travelled by the vehicle.

8. A cruise control system for controlling the speed of a motor vehicle, wherein the cruise control system (20) comprises:
- engine control means (21) adapted to automatically control the engine in dependence on information as to a target speed and the actual speed of the vehicle so as to endeavour to keep the speed of the vehicle essentially equal to the target speed;
- speed setting means (23), by means of which the driver of the vehicle may set the target speed to a desired basic value; and
- processing means (24) adapted to automatically and temporarily increase the target speed from the basic value to a modified value when it has established that one or several given conditions are fulfilled so as to thereby allow the vehicle, when descending or after having descended a downhill slope, to temporarily maintain a speed above the speed corresponding to the basic value,
**characterized in that** the processing means (24) is adapted:
- to establish, based on consecutive measuring or calculation values as to the instantaneous inclination or altitude or driving resistance of the vehicle, an evaluation value representing the degree of hilliness of a latest stretch of road travelled by the vehicle; and
- to maintain the target speed at the modified value for a given time period or gradually decrease the target speed from the modified value towards the basic value with steps of a given magnitude at given time intervals, optionally on condition that one or several given conditions are fulfilled, the processing means (24) being adapted to establish the length of said time period or time intervals in dependence on the prevailing evaluation value.

9. A cruise control system according to claim 8, **characterized in that** the processing means (24) is adapted to maintain the target speed at the modified value after the lapse of said time period as long as the driving resistance of the vehicle remains lower than a given lower threshold value, optionally on condition that one or several further conditions are fulfilled.

10. A cruise control system according to claim 9, **characterized in that** the processing means (24), when it has established after the lapse of said time period that the driving resistance of the vehicle is higher than said lower threshold value, is adapted to gradually decrease the target speed from the modified value towards the basic value with steps of a given magnitude at given time intervals, the processing means (24) being adapted to establish the length of said time intervals in dependence on the prevailing evaluation value.

11. A cruise control system according to any of claims 8-10, **characterized in that** the processing means (24), after an increase of the target speed to the modified value, is adapted to reset the target speed to the basic value when it has established that the following conditions are fulfilled:
- the driving resistance of the vehicle is lower than a given threshold value, and
- the acceleration of the vehicle is higher than an acceleration threshold value.

12. A cruise control system according to any of claims 8-11, **characterized in that** the processing means (24), when it has established that the driving resistance of the vehicle has been increased above a given upper threshold value after an increase of the target speed to the modified value, is adapted to lower the target speed from the modified value to a value essentially corresponding to the speed at which the vehicle was running when it was established that the driving resistance of the vehicle had been increased above this upper threshold value.

13. A cruise control system according to any of claims 8-12, **characterized in that** the processing means (24) is adapted to take information as to the prevailing total weight of the vehicle into account in the establishment of the length of said time period and/or time intervals.

14. A cruise control system according to any of claims 8-13, **characterized in that** the processing means (24) is adapted to establish the evaluation value as a measure indicating how long part of the time the driving resistance of the vehicle has been above a given threshold value during the latest stretch of road travelled by the vehicle.

15. A computer program loadable into the internal memory of a computer in a motor vehicle, the computer program comprising computer program code for causing the computer:
- to determine or receive a basic value for a target speed;
- to determine or receive a value representing the actual speed of the vehicle;
- to control the engine of the vehicle in dependence on information as to the target speed and the actual speed of the vehicle so as to endeavour to keep the speed of the vehicle essentially equal to the target speed;
- to automatically and temporarily increase the target speed from the basic value to a modified value when it is established that one or several given conditions are fulfilled;
- to determine or receive consecutive measuring or calculation values as to the instantaneous inclination or altitude or driving resistance of the vehicle;
- to establish an evaluation value representing the degree of hilliness of a latest stretch of road travelled by the vehicle based on said consecutive measuring or calculation values; and
- to maintain the target speed at the modified value for a given time period or gradually decrease the target speed from the modified value towards the basic value with steps of a given magnitude at given time intervals, optionally on condition that one or several given conditions are fulfilled, the length of said time period or time intervals being established in dependence on the prevailing evaluation value.

16. A computer program product comprising a data storage medium readable by an electronic control unit (30), a computer program according to claim 15 being stored on said data storage medium.

17. An electronic control unit (30) comprising an execution means (31), a memory (33) connected to the execution means and a data storage medium (34) connected to the execution means, wherein a computer program according to claim 15 is stored on said data storage medium (34).

## Patentansprüche

1. Verfahren zum Steuern der Sollgeschwindigkeit eines Geschwindigkeitsregelsystems (20) eines Kraftfahrzeuges, wobei das Geschwindigkeitsregelsystem ein Motorsteuermittel (21) aufweist, das dazu ausgelegt ist, automatisch den Motor des Fahrzeugs in Abhängigkeit von Informationen zu steuern, wie die Sollgeschwindigkeit und die aktuelle Geschwindigkeit des Fahrzeugs, um zu bewerkstelligen, dass die Geschwindigkeit des Fahrzeugs im Wesentlichen gleich der Sollgeschwindigkeit bleibt, wobei die Sollgeschwindigkeit auf einen Basiswert festgelegt wird, der von dem Fahrer des Fahrzeugs einstellbar ist, und wobei die Sollgeschwindigkeit automatisch und zeitweise ausgehend von dem Basiswert auf einen modifizierten Wert angehoben wird, wenn festgestellt wird, dass eine oder mehrere vorgegebene Bedingungen erfüllt sind, sodass ermöglicht wird, dass das Fahrzeug, dann, wenn es ein Gefälle befährt, oder nachdem es ein Gefälle befahren hat, vorübergehend eine Geschwindigkeit oberhalb der Geschwindigkeit beibehält, die dem Basiswert entspricht,
**dadurch gekennzeichnet, dass** ein Evaluationswert, der den Grad der Hügeligkeit einer zuletzt zurückgelegten Strecke der mit dem Fahrzeug befahrenen Straße auf Grundlage aufeinanderfolgender Messungen oder Berechnungswerten festgelegt wird, wie beispielsweise der aktuellen Neigung oder Höhe oder des Fahrwiderstands des Fahrzeugs; und
dass die Sollgeschwindigkeit optional unter der Bedingung, dass eine oder mehrere Bedingungen erfüllt sind, auf dem modifizierten Wert für eine bestimmte Zeitperiode gehalten wird oder graduell von dem modifizierten Wert auf den Basiswert in Schritten vorgegebener Größe zu vorgegebenen Zeitintervallen reduziert wird, wobei die Länge der Zeitperiode oder der Zeitintervalle in Abhängigkeit von dem vorherrschenden Evaluationswert festgelegt wird.

2. Verfahren nach Anspruch 1, **dadurch gekennzeichnet, dass** die Sollgeschwindigkeit auf dem modifizierten Wert nach dem Verstreichen der Zeitperiode so lange gehalten wird, wie der Fahrwiderstand des Fahrzeugs unterhalb eines vorgegebenen unteren Schwellenwerts bleibt, optional unter der Bedingung, dass eine oder mehrere weitere Bedingungen erfüllt sind.

3. Verfahren nach Anspruch 2, **dadurch gekennzeichnet, dass** dann wenn nach dem Verstreichen der Zeitperiode festgestellt wird, dass der Fahrwiderstand des Fahrzeugs größer als der untere Schwellenwert ist, die Sollgeschwindigkeit graduell modifizierten Wert auf den Basiswert in Schritten vorgegebener Größe zu vorgegebenen Zeitintervallen reduziert wird, wobei deren Länge in Abhängigkeit von dem vorherrschenden Evaluationswert festgelegt wird.

4. Verfahren nach einem der Ansprüche 1 bis 3, **dadurch gekennzeichnet, dass** die Sollgeschwindigkeit nach einem Anheben derselben auf den modifizierten Wert auf den Basiswert zurückgesetzt wird, wenn festgestellt wird, dass die folgenden Bedingungen erfüllt sind:
- der Fahrwiderstand des Fahrzeugs ist niedriger als ein vorgegebener Schwellenwert, und
- die Beschleunigung des Fahrzeugs ist höher als ein Beschleunigungsschwellenwert.

5. Verfahren nach einem der Ansprüche 1 bis 4, **dadurch gekennzeichnet, dass** dann, wenn festgestellt wird, dass der Fahrwiderstand des Fahrzeugs auf einen Wert oberhalb eines vorgegebenen oberen Schwellenwerts nach dem Anheben der Soligeschwindigkeit auf den modifizierten Wert angestiegen ist, die Sollgeschwindigkeit von dem modifizierten Wert auf einen Wert reduziert wird, der im Wesentlichen der Geschwindigkeit entspricht, mit welcher das Fahrzeug sich fortbewegte, als festgestellt wurde, dass der Fahrwiderstand des Fahrzeugs über diesen oberen Schwellenwert anstieg.

6. Verfahren nach einem der Ansprüche 1 bis 5, **dadurch gekennzeichnet, dass** das vorherrschende Gesamtgewicht des Fahrzeugs bei der Feststellung der Länge der Zeitperiode und/oder der Zeitintervalle berücksichtigt wird.

7. Verfahren nach einem der Ansprüche 1 bis 6, **dadurch gekennzeichnet, dass** der Evaluationswert als Maß eingesetzt wird, das anzeigt, wie lange ein Teil der Zeit ist, zu der der Fahrwiderstand des Fahrzeugs oberhalb eines vorgegebenen Schwellenwerts während der zuletzt zurückgelegten Strecke der durch das Fahrzeugbefahrenen Straße ist.

8. Geschwindigkeitsregelsystem zum Steuern der Geschwindigkeit eines Kraftfahrzeugs, wobei das Geschwindigkeitsregelsystem (20) umfasst:
- Motorsteuermittel (21) die dazu ausgelegt sind, automatisch den Motor in Abhängigkeit von Informationen zu Steuern, wie beispielsweise der Sollgeschwindigkeit und der aktuellen Geschwindigkeit des Fahrzeugs, um zu bewerkstelligen, dass die Geschwindigkeit des Fahrzeugs im Wesentlichen gleich der Sollgeschwindigkeit gehalten wird;
Geschwindigkeitsfestlegemittel (23), mit denen der Fahrer des Fahrzeugs die Sollgeschwindigkeit auf einen gewünschten Basiswert festlegen kann; und
- Verarbeitungsmittel (24), die dazu ausgelegt sind, automatisch und vorübergehend die Sollgeschwindigkeit von dem Basiswert auf dem modifizierten Wert anzuheben, wenn festgestellt wurde, dass eine oder mehrere Bedingungen erfüllt sind, um dadurch zu ermöglichen, dass das Fahrzeug, wenn es ein Gefälle befährt oder ein Gefälle zurückgelegt hat, vorübergehend eine Geschwindigkeit oberhalb der Geschwindigkeit beibehält, die dem Basiswert entspricht,
**dadurch gekennzeichnet, dass** das Verarbeitungsmittel (24) dazu ausgelegt ist:
- Auf Grundlage aufeinanderfolgender Messungen oder Berechnungswerten, wie die aktuelle Neigung oder Höhe oder der Fahrwiderstand des Fahrzeugs, einen Evaluationswert festzulegen, der den Grad der Hügeligkeit einer zuletzt zurückgelegten Strecke der von dem Fahrzeug befahrenen Straße wiedergibt; und
- die Sollgeschwindigkeit auf dem modifizierten Wert für eine vorgegebene Zeitperiode zu halten oder graduell die Sollgeschwindigkeit von dem modifizierten Wert auf den Basiswert in Schritten vorgegebener Größe zu vorgegebenen Zeitintervallen zu reduzieren, optional unter der Voraussetzung, dass eine oder mehrere vorgegebene Bedingungen erfüllt sind, wobei das Verarbeitungsmittel (24) dazu ausgelegt ist, die Länge der Zeitperiode oder der Zeitintervalle in Abhängigkeit von dem vorherrschenden Evaluationswert einzustellen.

9. Geschwindigkeitsregelsystem nach Anspruch 8, **dadurch gekennzeichnet, dass** das Verarbeitungsmittel (24) dazu ausgelegt ist, um die Sollgeschwindigkeit auf den modifizierten Wert nach dem Verstreichen der Zeitperiode so lange zu halten, wie der Fahrwiderstand des Fahrzeugs kleiner als ein vorgegebener unterer Schwellenwert bleibt, optional unter der Bedingung, dass eine oder mehrere Bedingungen erfüllt sind.

10. Geschwindigkeitsregelsystem nach Anspruch 9, **dadurch gekennzeichnet, dass** das Verarbeitungsmittel (24) dann, wenn es festgestellt hat, dass nach dem Verstreichen der Zeitperiode der Fahrwiderstand des Fahrzeugs größer als der untere Schwellenwert ist, dazu ausgelegt ist, graduell die Sollgeschwindigkeit von dem modifizierten Wert auf dem Basiswert in Schritten vorgegebener Größe zu vorgegebenen Zeitintervallen zu reduzieren, wobei das Verarbeitungsmittel (24) dazu ausgelegt ist, die Länge der Zeitintervalle in Abhängigkeit von dem vorherrschenden Evaluationswert festzulegen.

11. Geschwindigkeitsregelsystem nach einem der Ansprüche 8 bis 10, **dadurch gekennzeichnet, dass** das Verarbeitungsmittel (24) dazu ausgelegt ist, nach einem Anheben der Sollgeschwindigkeit auf den modifizierten Wert, die Sollgeschwindigkeit auf den Basiswert zurückzusetzen, wenn festgestellt wurde, dass die folgenden Bedingungen erfüllt sind:
- der Fahrwiderstand des Fahrzeugs ist niedriger als ein vorgegebener Schwellenwert, und
- die Beschleunigung des Fahrzeugs ist größer als ein Beschleunigungsschwellenwert.

12. Geschwindigkeitsregelsystem nach einem der Ansprüche 8 bis 11, **dadurch gekennzeichnet, dass** das Verarbeitungsmittel (24) dann, wenn es festgestellt hat, dass der Fahrwiderstand des Fahrzeugs über einen vorgegebenen oberen Schwellenwert angestiegen ist, nach einem Ansteigen der Sollgeschwindigkeit auf den modifizierten Wert, dazu ausgelegt ist, um die Sollgeschwindigkeit von dem modifizierten Wert auf einen Wert abzusenken, der im Wesentlichen der Geschwindigkeit entspricht, mit welcher das Fahrzeug fuhr, als festgestellt wurde, dass der Fahrwiderstand des Fahrzeugs über den oberen Schwellenwert angestiegen ist

13. Geschwindigkeitsregelsystem nach einem der Ansprüche 8 bis 12, **dadurch gekennzeichnet, dass** das Verarbeitungsmittel (24) dazu ausgelegt ist, um Informationen, wie das aktuelle Gesamtgewicht des Fahrzeugs bei der Festlegung der Zeitperiode und/oder der Zeitintervalle zu berücksichtigen.

14. Geschwindigkeitsregelsystem nach einem der Ansprüche 8 bis 13, **dadurch gekennzeichnet, dass** das Verarbeitungsmittel (24) dazu ausgelegt ist, den Evaluationswert als Maß dafür festzulegen, das anzeigt, wie lange ein Teil der Zeit ist, zu der der Fahrwiderstand des Fahrzeugs oberhalb eines vorgegebenen Schwellenwerts während des zuletzt zurückgelegten Abschnitts der durch das Fahrzeug liegt.

15. Computerprogramm, das in den internen Speicher eines Computers in einem Kraftfahrzeug geladen werden kann, wobei das Computerprogramm einen Computerprogrammcode umfasst, um zu bewirken, dass der Computer:
- einen Basiswert für eine Sollgeschwindigkeit bestimmt oder erhält;
- einen Wert bestimmt oder erhält, der die aktuelle Geschwindigkeit des Fahrzeugs widergibt;
- den Motor des Fahrzeugs in Abhängigkeit von Informationen steuert, wie der Sollgeschwindigkeit und der aktuellen Geschwindigkeit des Fahrzeugs, um zu bewerkstelligen, dass die Geschwindigkeit des Fahrzeugs im Wesentlichen gleich der Sollgeschwindigkeit gehalten wird;
- automatisch und vorübergehend die Sollgeschwindigkeit von dem Basiswert auf einen modifizierten Wert anhebt, wenn festgestellt wird, dass ein oder mehrere vorgegebenen Bedingungen erfüllt sind;
- aufeinanderfolgende Messungen oder Kalkulationswerte bezüglich der aktuellen Neigung oder Höhe oder des Fahrwiderstands des Fahrzeugs bestimmt oder zu erhält;
- einen Evaluationswert festlegt, der den Grad der Hügeligkeit der zuletzt zurückgelegten Strecke der von den Fahrzeug befahrenen Straße auf Grundlage der aufeinanderfolgenden Messungen oder Kalkulationswerte angibt; und die Sollgeschwindigkeit auf dem modifizierten Wert über eine vorgegebene Zeitperiode beibehält oder graduell die Sollgeschwindigkeit von dem modifizierten Wert auf den Basiswert in Schritten vorgegebener Größe zu vorgegebenen Zeitintervallen reduziert, optional unter der Voraussetzung, dass eine oder mehrere Bedingungen erfüllt sind, wobei die Länge der Zeitperiode oder der Zeitintervalle in Abhängigkeit von den vorherrschenden Evaluationswerten festgelegt wird.

16. Computerprogrammprodukt umfassend ein Datenspeichermedium, das von einer elektronischen Steuereinheit (30) auslesbar ist, wobei ein Computerprogramm nach Anspruch 15 auf dem Datenspeichermedium gespeichert ist.

17. Elektronische Steuereinheit (30) umfassend ein Ausführmittel (31), einen Speicher (33), der mit dem Ausführmittel verbunden ist, und ein Datenspeichermedium (34), das mit dem Ausführmittel verbunden ist, wobei ein Computerprogramm nach Anspruch 15 auf dem Datenspeichermedium (34) gespeichert ist.

## Revendications

1. Procédé de commande de la vitesse cible d'un système régulateur de vitesse (20) d'un véhicule à moteur, le système régulateur de vitesse comprenant des moyens de commande de moteur (21) adaptés pour commander automatiquement le moteur du véhicule en fonction d'informations concernant la vitesse cible et la vitesse réelle du véhicule, de façon à tenter de maintenir la vitesse du véhicule essentiellement égale à la vitesse cible, la vitesse cible étant définie à une valeur de base qui peut être réglée par le conducteur du véhicule et la vitesse cible étant augmentée automatiquement et temporairement de la valeur de base à une valeur modifiée lorsqu'il est établi qu'une ou plusieurs conditions données sont remplies, pour ainsi permettre au véhicule, pendant qu'il descend ou après qu'il a descendu une pente, de maintenir temporairement une vitesse supérieure à la vitesse correspondant à la valeur de base, **caractérisé en ce que** :
- une valeur d'évaluation représentant le degré de vallonnement d'une portion de route parcourue en dernier par le véhicule est établie à partir de valeurs mesurées ou calculées consécutives concernant la valeur instantanée de l'inclinaison ou de l'altitude ou de la résistance à l'avancement du véhicule ; et
- la vitesse cible, éventuellement à condition qu'une ou plusieurs conditions données soient remplies, est maintenue à la valeur modifiée pendant un laps de temps donné ou est diminuée progressivement de la valeur modifiée vers la valeur de base, par paliers d'une grandeur donnée, à intervalles de temps donnés, la longueur dudit laps de temps ou desdits intervalles de temps étant établie en fonction de la valeur d'évaluation courante.

2. Procédé selon la revendication 1, **caractérisé en ce que** la vitesse cible est maintenue à la valeur modifiée après l'écoulement dudit laps de temps tant que la résistance à l'avancement du véhicule reste inférieure à une valeur seuil inférieure donnée, éventuellement à condition qu'une ou plusieurs conditions supplémentaires soient remplies.

3. Procédé selon la revendication 2, **caractérisé en ce que**, lorsqu'il est établi après l'écoulement dudit laps de temps que la résistance à l'avancement du véhicule est supérieure à ladite valeur seuil inférieure, la vitesse cible est diminuée progressivement de la valeur modifiée vers la valeur de base, par paliers d'une grandeur donnée, à intervalles de temps donnés, dont la longueur est établie en fonction de la valeur d'évaluation courante.

4. Procédé selon l'une quelconque des revendications 1 à 3, **caractérisé en ce que** la vitesse cible, après avoir été augmentée jusqu'à la valeur modifiée, est réinitialisée à la valeur de base lorsqu'il est établi que les conditions suivantes sont remplies :
- la résistance à l'avancement du véhicule est inférieure à une valeur seuil donnée, et
- l'accélération du véhicule est supérieure à une valeur seuil d'accélération.

5. Procédé selon l'une quelconque des revendications 1 à 4, **caractérisé en ce que**, lorsqu'il est établi que la résistance à l'avancement du véhicule a été augmentée au-dessus d'une valeur seuil supérieure donnée après une augmentation de la vitesse cible jusqu'à la valeur modifiée, la vitesse cible est abaissée de la vitesse modifiée à une valeur correspondant essentiellement à la vitesse à laquelle le véhicule avançait au moment où il a été établi que la résistance à l'avancement du véhicule avait été augmentée au-dessus de cette valeur seuil supérieure.

6. Procédé selon l'une quelconque des revendications 1 à 5, **caractérisé en ce que** le poids total courant du véhicule est pris en compte pour l'établissement de la longueur dudit laps de temps et/ou desdits intervalles de temps.

7. Procédé selon l'une quelconque des revendications 1 à 6, **caractérisé en ce que** la valeur d'évaluation est établie sous la forme d'une mesure indiquant pendant combien de temps la résistance à l'avancement du véhicule a été supérieure à une valeur seuil donnée pendant la portion de route parcourue en dernier par le véhicule.

8. Système régulateur de vitesse pour réguler la vitesse d'un véhicule à moteur, le système régulateur de vitesse (20) comprenant :
- des moyens de commande de moteur (21) adaptés pour commander automatiquement le moteur en fonction d'informations concernant une vitesse cible et la vitesse réelle du véhicule, de façon à tenter de maintenir la vitesse du véhicule essentiellement égale à la vitesse cible,
- des moyens de réglage de vitesse (23), au moyen desquels le conducteur du véhicule peut régler la vitesse cible à une valeur de base souhaitée ; et
- des moyens de traitement (24) adaptés pour augmenter automatiquement et temporairement la vitesse cible de la valeur de base à une valeur modifiée lorsqu'il a été établi qu'une ou plusieurs conditions données sont remplies, pour ainsi permettre au véhicule, pendant qu'il descend ou après qu'il a descendu une pente, de maintenir temporairement une vitesse supérieure à la vitesse correspondant à la valeur de base,
**caractérisé en ce que** les moyens de traitement (24) sont adaptés pour :
- établir, à partir de valeurs mesurées ou calculées consécutives concernant la valeur instantanée de l'inclinaison ou de l'altitude ou de la résistance à l'avancement du véhicule, une valeur d'évaluation représentant le degré de vallonnement d'une portion de route parcourue en dernier par le véhicule ; et
- maintenir la vitesse cible à la valeur modifiée pendant un laps de temps donné ou diminuer progressivement la vitesse cible de la valeur modifiée vers la valeur de base, par paliers d'une grandeur donnée, à intervalles de temps donnés, éventuellement à condition qu'une ou plusieurs conditions données soient remplies, les moyens de traitement (24) étant adaptés pour établir la longueur dudit laps de temps ou desdits intervalles de temps en fonction de la valeur d'évaluation courante.

9. Système régulateur de vitesse selon la revendication 8, **caractérisé en ce que** les moyens de traitement (24) sont adaptés pour maintenir la vitesse cible à la valeur modifiée après l'écoulement dudit laps de temps tant que la résistance à l'avancement du véhicule reste inférieure à une valeur seuil inférieure donnée, éventuellement à condition qu'une ou plusieurs conditions supplémentaires soient remplies.

10. Système régulateur de vitesse selon la revendication 9, **caractérisé en ce que** les moyens de traitement (24), lorsqu'ils ont établi après l'écoulement dudit laps de temps que la résistance à l'avancement du véhicule est supérieure à ladite valeur seuil inférieure, sont adaptés pour diminuer progressivement la vitesse cible de la valeur modifiée vers la valeur de base, par paliers d'une grandeur donnée, à intervalles de temps donnés, les moyens de traitement (24) étant adaptés pour établir la longueur desdits intervalles de temps en fonction de la valeur d'évaluation courante.

11. Système régulateur de vitesse selon l'une quelconque des revendications 8 à 10, **caractérisé en ce que** les moyens de traitement (24), après une augmentation de la vitesse cible jusqu'à la valeur modifiée, sont adaptés pour réinitialiser la vitesse cible à la valeur de base lorsqu'ils ont établi que les conditions suivantes sont remplies :
- la résistance à l'avancement du véhicule est inférieure à une valeur seuil donnée, et
- l'accélération du véhicule est supérieure à une valeur seuil d'accélération.

12. Système régulateur de vitesse selon l'une quelconque des revendications 8 à 11, **caractérisé en ce que** les moyens de traitement (24), lorsqu'ils ont établi que la résistance à l'avancement du véhicule a été augmentée au-dessus d'une valeur seuil supérieure donnée après une augmentation de la vitesse cible à la valeur modifiée, sont adaptés pour abaisser la vitesse cible de la vitesse modifiée à une valeur correspondant essentiellement à la vitesse à laquelle le véhicule avançait au moment où il a été établi que la résistance à l'avancement du véhicule avait été augmentée au-dessus de cette valeur seuil supérieure.

13. Système régulateur de vitesse selon l'une quelconque des revendications 8 à 12, **caractérisé en ce que** les moyens de traitement (24) sont adaptés pour prendre en compte des informations concernant le poids total courant du véhicule pour l'établissement de la longueur dudit laps de temps et/ou desdits intervalles de temps.

14. Système régulateur de vitesse selon l'une quelconque des revendications 8 à 13, **caractérisé en ce que** les moyens de traitement (24) sont adaptés pour établir la valeur d'évaluation sous la forme d'une mesure indiquant pendant combien de temps la résistance à l'avancement du véhicule a été supérieure à une valeur seuil donnée pendant la portion de route parcourue en dernier par le véhicule.

15. Programme informatique pouvant être chargé dans la mémoire interne d'un ordinateur installé dans un véhicule à moteur, le programme informatique comprenant un code programme informatique destiné à faire en sorte que l'ordinateur :
- détermine ou reçoive une valeur de base pour une vitesse cible ;
- détermine ou reçoive une valeur représentant la valeur réelle du véhicule ;
- commande le moteur du véhicule en fonction d'informations concernant la vitesse cible et la vitesse réelle du véhicule, de façon à tenter de maintenir la vitesse du véhicule essentiellement égale à la vitesse cible ;
- augmente automatiquement et temporairement la vitesse cible de la valeur de base à une valeur modifiée lorsqu'il est établi qu'une ou plusieurs conditions données sont remplies ;
- détermine ou reçoive des valeurs mesurées ou calculées consécutives concernant la valeur instantanée de l'inclinaison ou de l'altitude ou de la résistance à l'avancement du véhicule ;
- établisse une valeur d'évaluation représentant le degré de vallonnement d'une portion de route parcourue en dernier par le véhicule à partir des valeurs mesurées ou calculées consécutives ; et
- maintienne la vitesse cible à la valeur modifiée pendant un laps de temps donné ou diminue progressivement la vitesse cible de la valeur modifiée vers la valeur de base, par paliers d'une grandeur donnée, à intervalles de temps donnés, éventuellement à condition qu'une ou plusieurs conditions données soient remplies, la longueur dudit laps de temps ou desdits intervalles de temps étant établie en fonction de la valeur d'évaluation courante.

16. Produit de programme informatique comprenant un support de stockage de données lisible par une unité de commande électronique (30), un programme informatique selon la revendication 15 étant stocké sur ledit support de stockage de données.

17. Unité de commande électronique (30) comprenant des moyens d'exécution (31), une mémoire (33) connectée aux moyens d'exécution et un support de stockage de données (34) connecté aux moyens d'exécution, un programme informatique selon la revendication 15 étant stocké sur ledit support de stockage de données.
